# EUROPEAN PATENT APPLICATION

(11) **EP 1 233 609 A1**
(43) Date of publication of application: **21.08.2002**
(21) Application number: 00974914.4
(22) Date of filing: 10.11.2000
(51) Int. Cl.: H04N 1/387, H04N 1/21

(54) **APPARATUS FOR DIVIDING A SET OF IMAGE DATA IN OPTICAL INFORMATION RECORDED MEDIUM, METHOD FOR THE SAME AND INFORMATION RECORDED MEDIUM**

(30) Priority: 12.11.1999 JP 32235599
(71) Applicant: Effort Corporation, Tokyo 104-0045 (JP)
(72) Inventor: SUEHIRO, Hiroaki, Adachi-ku, Tokyo 120-0003 (JP)
(74) Representative: Staudt, Hans-Peter, Dipl.-Ing.
(86) International application number: JP0007941
(87) International publication number: WO01037543

(57) **Abstract**

A process for dividing image data of plural image areas included in an optical information recorded medium in the form of a sheet into image data of each of the image areas comprising: reading images existing in plural image areas and non-image areas to obtain image data comprising binary pixel data and position information on the position of each of the image area, storing the image data as an image file in a first memory; scanning the image data in a first memory to check if the logical value of each pixel is 1 or 0, and then judging whether the pixel having a logical value of 1 is noise or not based on a specified threshold value; judging that one of the image areas is present in a area including aggregated pixels including the pixel having a logical value of 1 when the portion has dimension not smaller than a predetermined dimension; storing image data of an image area surrounded by the contour line in a second memory; setting a logical value of pixel data in the image area stored in the second memory at 0, out of plural image areas in the image file stored in the first memory.

## Description

### Background of Invention

### 1. Field of the invention

The present invention relates to an apparatus for dividing image data in plural image areas, which are recorded in an optical information recorded medium (generally referred to as optical information recording medium) in the form of a sheet, into those in individual image area, and a process therefor, and an information recorded medium wherein a program of the process is recorded. In the optical information recorded medium in the form of a sheet (e.g., a sheet-shaped micro film such as a microfilm), plural frames (images) included in a microfilm having photographed document or drawing are recorded with being arranged through non-image areas (image frame portion) between the images.

### 2. Description of the Related Art

A microfilm, which is already known as one of optical information recorded media, is prepared by optically recording analogously image information (images) such as document or drawing to be recorded in order on a set of frames which are arranged in series on a continuous silver halide film. Examples of such a microfilm include a negative film prepared by photographing and then development procedure, and a COM (Computer Out-put Microfiche) film prepared by COM system in which photographing is performed using a CRT and laser beam.

As the micro film wherein a set of all frames are arranged in series, an optical information recorded medium in the form of a sheet wherein the frames are arranged through non-image areas (image frame portion) between the images on a surface of a sheet has been employed. The optical information recorded medium includes, for example, a microfiche or film jacket wherein a large number of micro images are longitudinally and latitudinally arranged on a transparent film in the form of a sheet through blank space (image frame portion) between the images.

With the development of data processing technology using a digital computer, analogous information which is analogously recorded on an information recording medium is also required to be converted into digital data, such that the analogous information can be processed by the digital computer.

In case, as the information recorded medium on which information such as image is analogously recorded, a sheet-shaped micro film (e.g., microfiche), which has, as mentioned above, a structure that a large number of micro images are longitudinally and latitudinally arranged on a transparent film in the form of a sheet through blank space between the images is employed, the following procedures are carried out. In order to read out each of images in plural frames, which have been recorded on a sheet-shaped optical information recorded medium, to store as digital image data in a memory, the images in plural frames are successively photographed one by one using a CCD camera and subjected to signal processing, whereby digital image data corresponding to the image in one of the frames are generated and successively stored in a memory.

### Summary of the Invention

However, in case, by using the above conventional process that the plural frames (images) recorded on a sheet-shaped optical information recorded medium are successively photographed one by one by the use of a CCD camera and subjected to signal processing, the recorded images are tried to be converted into digital signals, the operation for photographing the frames (images) is required to be carried out at every frame.

Particularly, in case the sizes and shapes of the frames (images) recorded on a sheet-shaped optical information recorded medium are not the same as each other and hence vary widely, the above operation for photographing the images to convert the recorded images into digital signals requires much more time period.

The object of the present invention lies in the resolution of the above problems.

As a result of concentrated study to resolve the above problems, the inventor has attained the present invention; i.e., an apparatus for dividing image data in plural image areas, which are recorded in an optical information recorded medium in the form of a sheet, into those in individual image area, and a process therefor, and an information recorded medium wherein the process is recorded.

The present invention is provided by an apparatus for dividing image data of plural image areas included in an optical information recorded medium in the form of a sheet into image data of each of the image areas comprising the means (1) to (8):
means (1) for reading images existing in plural image areas and non-image areas for separating the image areas to each of the image areas, theses image and non-image areas being provided in the optical information recorded medium, by an element capable of converting light to electric signals, to obtain image data comprising binary pixel data consisting of logical values of 0 and 1 and position information on the position of each of the image areas;
means (2) for storing the image data as an image file in a first memory;
means (3) for scanning the image data in a first memory according to a predetermined scanning pattern from a specified point (location) of the image data, to check whether the logical value of each pixel of the image is 1 or 0, and in case of detecting the pixel having a logical value of 1 by the checking, checking logical values of plural pixels in the vicinity of the pixel having a logical value of 1 to judge whether the pixel having a logical value of 1 is noise or not based on a specified threshold value;
means (4) for judging that one of the image areas is present in an area including aggregated pixels including the pixel having a logical value of 1 when the aggregated pixels has dimension not less than a predetermined dimension;
means (5) for detecting a contour line of one of the image areas, when it is judged that the one of image areas is present;
means (6) for storing image data of the image area surrounded by the contour line together with the position information in a second memory;
means (7) for setting a logical value of pixel data in the image area stored in the second memory at 0, out of the plural image areas in the image file stored in the first memory; and
means (8) for repeatedly using the means (3) to (7) such that the image data of each of the image areas stored in the first memory are stored in order in the second memory.

Further the present invention is provided by a process for dividing image data of plural image areas included in an optical information recorded medium in the form of a sheet into image data of each of the image areas comprising the steps (1) to (8):
a step (1) of reading images existing in plural image areas and non-image areas for separating the image areas to each of the image areas, theses image and non-image areas being provided in the optical information recorded medium, by an element capable of converting light to electric signals, to obtain image data comprising binary pixel data consisting of logical values of 0 and 1 and position information on the position of each of the image areas;
a step (2) of storing the image data as an image file in a first memory;
a step (3) of scanning the image data in a first memory according to a predetermined scanning pattern from a specified point of the image data, to check whether the logical value of each pixel of the image is 1 or 0, and in case of detecting the pixel having a logical value of 1 by the checking, checking logical values of plural pixels in the vicinity of the pixel having a logical value of 1 to judge whether the pixel having a logical value of 1 is noise or not based on a specified threshold value;
a step (4) of judging that one of the image areas is present in an area including aggregated pixels including the pixel having a logical value of 1 when the aggregated pixels has dimension not less than a predetermined dimension;
a step (5) of detecting a contour line of one of the image areas, when it is judged that the one of image areas is present;
a step (6) of storing image data of the image area surrounded by the contour line together with the position information in a second memory;
a step (7) of setting a logical value of pixel data in the image area stored in the second memory at 0, out of the plural image areas in the image file stored in the first memory; and
a step (8) of repeatedly using the means (3) to (7) such that the image data of each of the image areas stored in the first memory are stored in order in the second memory.

Furthermore the present invention is provided by an information recorded medium capable of reading by computer, wherein program for performing the above process is recorded.

### Brief Description of the Drawings

Fig. 1 is a block diagram for showing a preferred embodiment according to the invention.
Fig. 2 is an enlarged plain view of a part (optical information recorded medium) of Fig. 1.
Fig. 3 is a plain view of an image file obtained by processing by means of another part (signal processing device) of Fig. 1.

### Detailed Description of the Invention

As for the apparatus of the present for dividing image data comprising pixel data and position information in plural image areas, which are recorded in an optical information recorded medium in the form of a sheet (i.e., image recorded sheet), into those in individual image area, and a process therefor, and an information recorded medium wherein the process is recorded, a detail explanation is described by reference of the attached drawings. However, the combination of pixel data and position information are not referred to as "image data" but occasionally referred to as only "pixel data" for convenience sake.

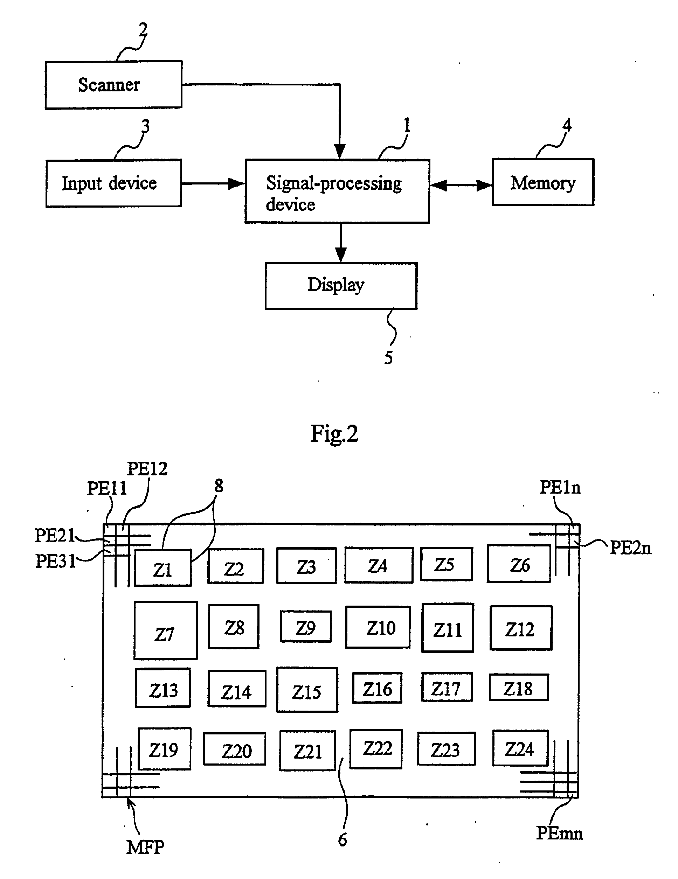

Fig. 1 is a block diagram to show an example of the constitution of the apparatus of the invention for dividing image data in plural image areas which are recorded in an optical information recorded medium in the form of a sheet into those in individual image area. In Fig. 1, the reference number 1 is a signal-processing device which includes a microprocessor, a random access memory (RAM), a read only memory (ROM) and a hard disk.

In Fig. 1, the reference number 2 is a scanner, which scans the image data recorded in an optical information recorded medium in the form of a sheet, to generate binary image signals corresponding to a pixel, the binary image signals being fed to the signal processing device 1. The scanner 2 corresponds to the element capable of converting light to electric signals as mentioned above. The element generally has a receptor (light-receiving element) of semiconductor that is capable of converting light to electric signals. Examples of the element includes further a digital camera.

The scanner has, for instance,
a structure mainly consisting of a manuscript stand (plain plate made up of material transparent to reading light) on which an optical information recorded medium in the form of a sheet to be read can be placed, a CCD line image sensor capable of conducting main scanning, and a driving mechanism that can move relatively the manuscript stand and the CCD line image sensor in a sub-scanning direction, a control unit and an interface; or
a structure mainly consisting of a photographic solid-state component of two dimensions capable of reading image information in an optical information recorded medium in the form of a sheet placed on a manuscript stand in the condition of a prescribed resolution to generate image signals, a control device and an interface. Other examples of the scanner include known photographic devices.

In the following description, as the scanner, one having the structure including a CCD line image sensor and a driving mechanism that can move relatively the manuscript stand and the CCD line image sensor in a sub-scanning direction is used.

The reference number 3 is an input device, which is provided with input means such as a keyboard or mouse. When a user of the signal-processing device inputs prescribed information into the device by the input means, the device is set in a desired operation condition depending on the inputted information. The reference number 4 is a memory (storage device), and the reference number 5 is a display.

Fig. 2 is a plain view showing schematically an optical information recorded medium in the form of a sheet which has plural image areas and the non-image areas separating the image areas into each image area (between the image areas), the non-image area being image frame which can be differentiated from the image area. In Fig. 2, the reference mark MFP is the optical information recorded medium which is to be read. Each of the reference numbers (marks) PE11, PE12 ----- PEmn on the optical information recorded medium MFP represents an individual pixel, and each of the reference marks Z1, Z2, Z3 ----- Z23, Z24 stands for an individual image area.

The individual image area Z1, Z2, Z3 -----Z23, Z24 can have different size and/or shape from each other. These images in Fig. 2 are also illustrated so as to have different size and/or shape. The non-image area (image frame) 6 which shows information differentiated from the image area, is formed between the image areas. The non-image 6 is an area showing something other than image, which is generally black portion else or may be perforation, letters (characters) and/or stain.

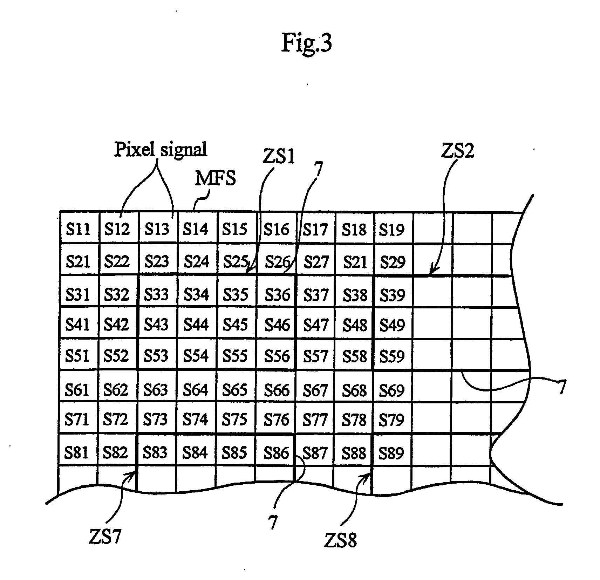

Fig. 3 is a schematic view of an image file MFS which shows the arrangement of the pixel data accurately corresponding to that of plural the image areas Z1, Z2, Z3 ----- Z23, Z24 in the optical information recorded medium in the form of a sheet MFP to be read.

In the image file MFS in Fig. 3, the reference numbers S11, S12, S13, S14 ---- represent pixel signals. S11 is a pixel signal corresponding to the pixel PE11 in the optical information recorded medium MFP of Fig. 2 to be read. Similarly, S12 is a pixel signal corresponding to the pixel PE12 in Fig. 2, S13 is a pixel signal corresponding to the pixel PE13 in Fig. 2, and S14 is a pixel signal corresponding to the pixel PE14 in Fig. 2. Thus, the pixel signals S11, S12, S13, S14 ---- represent pixel signals, which generate with corresponding to the pixels PE11, PE12, PE13, PE14 ----- in the optical information recorded medium MFP.

ZS1, ZS2 ---- in Fig. 3 each show a group of pixel signals composed of plural pixel signals (pixel data) S11, S12 ----- which correspond to the pixels PE11, PE12 ----- in the image areas Z1, Z2 -----.

Further, ZS1, ZS2 ---- ZS7, ZS8 --- in Fig. 3 each show a group of pixel signals which correspond to each of the image areas Z1, Z2 ----- Z7, Z8 ----- in the optical information recorded medium in the form of a sheet MFP that is shown in Fig. 2 and to be read.

A step (1) of the invention is, for example, conducted as follows: An optical information recorded medium in the form of a sheet MFP as shown in Fig. 2 is accurately set on a prescribed location of a manuscript stand of a scanner 2 for reading image information of the optical information recorded medium MFP, and then a starting information for starting a reading operation of the scanner 2 is inputted to a signal-processing device 1 by a input device 3, and consequently the signal-processing device 1 feeds control signals for the starting information to the scanner 2.

Thereby the scanner 2 moves relatively a CCD line image sensor capable of conducting main scanning and the manuscript stand in a sub-scanning direction, to generate the pixel signals S11, S12, S13, S14 ---- corresponding to the pixels PE11, PE12, PE13, PE14 ------ in the optical information recorded medium MFP by the CCD line image sensor, and then the generated pixel signals are fed into the signal-processing device 1. In such a manner, image areas and non-image areas in the optical information recorded medium MFP are scanned by the scanner to obtain the image data consisting of binary pixel data and position information on each area. The position information is information with respect to the arrangement of the pixel data. Means in the step (1) correspond to means (1) using the scanner, as described above.

A step (2) of the invention is, for example, conducted as follows: In the signal-processing device, the pixel signals S11, S12, S13, S14 ---- fed from the scanner 2 are recorded or stored in a first memory area (first memory) prescribed in memory 4. In this case, the stored pattern of an image file that is brought out by the pixel signals S11, S12, S13, S14 ---- stored in a first memory area (first memory) set in memory 4 accurately shows the arrangement embodiment of the pixel data (plural groups of pixel signals ZS1, ZS2 ---- in Fig. 3) which accurately correspond to the arrangement embodiment of the image areas Z1, Z2 ----- in the optical information recorded medium MFP to be read by a scanner (shown in Fig. 2). Means in the step (2) correspond to means (2) using the first memory and the signal-processing device, as described above.

A step (3) of the invention is, for example, conducted as follows: the pixel data of the image file stored in a first memory area of-memory 4, that is, pixel data (i.e., image data; see Fig. 3) which accurately correspond to the arrangement embodiment of the image areas in the optical information recorded medium in the form of a sheet MFP to be read by the scanner (see Fig. 2), are read from the image file MFS by staring scanning the image file from a prescribed position (e.g., the position A in Fig. 3) as starting point for scanning the pixel data of the file, the scanning being conducted according to a predetermined scanning pattern (pattern enabling to arrange the pixel signals in Fig. 3 linearly along time axis as the pixel signals S11, S12, S13, S14 ---- ), whereby the read signals are fed to the signal-processing device 1.

The pixel signals S11, S12, S13, S14 ---- that are read from the image file MFS and fed to the signal-processing device 1 are subjected to signal processing to be converted into binary pixel signals (signals in the form of binary signals). In the signal-processing device 1, the signal processing is carried out in the following manner.

In the signal-processing device 1, the image file MFS is first scanned from the starting point (e.g., the position A in Fig. 3) according to a predetermined scanning pattern. For example, as to the pixel signals arranged linearly along time axis such as the pixel signals S11, S12, S13, S14 ----, it is checked whether logical value of every one pixel of the pixel signals is 1 or 0. In case of detecting the pixel having a logical value of 1 by the checking, it is judged whether the pixel having a logical value of 1 is noise or not. The judging is, for example, carried out based on the pixel data (data as to whether logical value of pixel signal is 1 or 0) obtained by checking logical values of pixels in the vicinity of the pixel having a logical value of 1 (for example 4×4 pixels or 8×8 pixels in the vicinity of the pixel including the said pixel). In other words, the judging is carried out based on a specified threshold value such as setting of the number of pixels in the vicinity of the pixel.

In case the size of a portion of pixels in the vicinity of the pixel having a logical value of 1 is not smaller than a predetermined size, it is judged that the portion of pixels is not noise but there is one of groups of image pixels (e.g., the group represented by ZS1, ZS2 ----- in Fig. 3) corresponding to one of the image areas (e.g., the area represented by Z1, Z2 ------ in Fig. 2). This procedure is a step (4). Means in the steps (3) and (4) correspond to means (3) and (4) using the signal-processing device, as described above.

Subsequently, a step (5) of the invention is for example conducted as follows: In case it is judged that one of groups of image pixels shown in Fig. 3 corresponding to one of the image areas shown in Fig. 2 is present, the signal-processing device detects a contour line 7 of the group of image pixels. In the explanation in the present specification, the contour line of the group of image pixels is occasionally described as that of the image area because the contour line 7 of the group of image pixels shown in Fig. 3 corresponds to the contour line 8 of the image area shown in Fig. 2. The above detection of the contour line is carried out according to a method appropriately selected from known methods for detecting contour line.

For instance, the detection of the contour line can be conducted by the method for detecting contour line using a mask having 3×3 or 2×2 small pixels, which is, for example, described in T. Agui & M. Nakajima, "Computer Image Processing", pp. 64-68, 4/15/1983, published by Sangyo Shuppan Kabushikikaisya.

The group of pixel signals surrounded by the detected contour line 7 is one of groups of image signals ZS1, ZS2, ZS3 ---- in the optical information recorded medium in the form of a sheet MFP as mentioned above. In this case, when the staring point for scanning the pixel data of the image file MFS (i.e., the prescribed position set in the image file MFS) is the position A in Fig. 3, and the pixel signals in Fig. 3 can be arranged linearly along time axis in the same manner as the pixel signals S11, S12, S13, S14 ---- by scanning the file in the predetermined scanning pattern from the above starting point, the group of pixel signals surrounded by the detected contour line 7 corresponds to ZS1 (a group of pixels corresponding to the image area Z1 in Fig. 2), one of groups of image signals ZS1, ZS2, ZS3 ---- in the optical information recorded medium MFP.

Subsequently, a step (6) of the invention is, for example, conducted as follows: In the signal processing device 1, the pixel data included in the group of pixel signals ZS1 surrounded by the detected contour line are recorded or stored in a second memory area (second memory) set in memory 4 together with information indicating location of the image area corresponding to the group of pixel signals. That is that the image data comprising pixel data and position information.

In the signal processing device 1, then, in a step (7), the group of pixel data ZS1 stored as image data in a second memory area, which is selected from groups of image signals ZS1, ZS2, ZS3 ---- in the image file MFS stored in a first memory area (first memory) set in memory 4, is set at logical value of 0.

Subsequently, a step (8) of the invention is for example conducted as follows: In the signal-processing device 1, a second scanning of the image file MFS is carried out by setting a prescribed point as the staring point for scanning the pixel data of the file MFS (e.g., the position A in Fig. 3), and scanning the file MFS in the predetermined scanning pattern from the above starting point. Generally, the scanning operation is started from the position A, and after the group of pixel signals is detected, the scanning is carried out from the position after the detected point according to the predetermined scanning pattern, without returning to the position A. This procedure is preferred in term of efficiency. Means in the steps (5) to (8) correspond to means (5) to (8) using the signal-processing device, as described above.

As for the pixel signal (pixel) of each of plural pixel signals obtained above that is arranged linearly along a time axis, it is checked whether the logical value of the pixel signal (pixel) is 1 or 0. Subsequently, in case a pixel having a logical value of 1 is detected, it is judged whether the detected pixel having a logical value of 1 is noise or not based on a specified threshold value, i.e., the pixel data (data as to whether the logical value of pixel is 1 or 0) of pixels in the vicinity of the pixel having a logical value of 1 (for example 4×4 pixels or 8×8 pixels in the vicinity of the pixel including the said pixel). Then, in case the pixel having a logical value of 1 has dimension not smaller than a predetermined dimension (size), it is determined that the pixel is not noise but there exists one of the groups of pixel signals corresponding to one of the image areas.

In case it is judged that there exists one of the group of pixel signals shown in Fig. 3 corresponding to one of the image areas shown in Fig. 2, as mentioned above, the contour line of the group of pixel signals which has been confirmed present above is detected in the signal-processing device. Since all pixel data included in the group of pixel data ZS1 detected by the first scanning of the image file MFS have been set at logical value of 0, as mentioned previously, a group of pixel signals detected based on pixel data obtained by a second scanning of the image file MFS comes to a group of pixel signals ZS2 in Fig. 3.

In the signal-processing device, the pixel data included in the group of pixel signals ZS2 surrounded by the detected contour line are stored in the second memory area (second memory) set in the memory 4 together with information indicating the image area corresponding to the group of pixel signals. Therefore, both the pixel data and position information are stored in the second memory. Further, in the signal-processing device, pixel data of the group of pixel signals ZS2 in the image file MFS stored in the first memory area (first memory) set in the memory 4 are set as 0 (logical value). When the pixel data are stored in the second memory, the prior image data (ZS1) are generally moved to other memory such as a hard disk.

Subsequently, in the signal-processing device, a prescribed position set in the image file MFS is set as a starting point for scanning the pixel data of image file MFS (e.g., the position A in Fig. 3), and then a third scanning of the image file MFS is carried out by setting a prescribed point as the staring point for scanning the pixel data of the file MFS (e.g., the position A in Fig. 3), and scanning the file MFS in the predetermined scanning pattern from the above starting point, as described previously. The scanning is also carried out from the position after the detected point according to the predetermined scanning in the same manner as the second scanning.

It is checked whether the logical value of pixel signal (pixel) of each of plural pixel signals obtained above that are arranged linearly along a time axis is 1 or 0. Subsequently, in case a pixel having a logical value of 1 is detected, it is judged whether the detected pixel having a logical value of 1 is noise or not based on a specified threshold value, i.e., the pixel data (data as to whether the logical value of pixel is 1 or 0) of pixels in the vicinity of the pixel having a logical value of 1. Then, in case the pixel having a logical value of 1 has dimension not smaller than a predetermined dimension, it is determined that the pixel is not noise but there exists one of the groups of pixel signals corresponding to one of the image areas.

In case it is judged that there exists one of the groups of pixel signals shown in Fig. 3 corresponding to one of the image areas shown in Fig. 2, as mentioned above, the contour line of the group of pixel signals which has been confirmed present above is detected in the signal-processing device. Since all pixel data included in the groups of pixel data ZS1, ZS2 detected by the first scanning and second scanning of the image file MFS have been set at logical value of 0, as mentioned previously, a group of pixel signals detected based on pixel data obtained by a third scanning of the image file MFS comes to a group of pixel signals ZS3 in Fig. 3.

In the signal-processing device, the pixel data included in the group of pixel signals ZS3 surrounded by the detected contour line are stored in the second memory area (second memory) set in the memory 4 together with information indicating the image area corresponding to the group of pixel signals. Therefore, both the pixel data and position information are stored in the second memory. Further, in the signal-processing device, pixel data of the group of pixel signals ZS3 in the image file MFS stored in the first memory area (first memory) set in the memory 4 are set as 0 (logical value).

In the signal-processing device, the operations as described above are repeated, until all pixel data of all group of pixel signals in the image file MFS stored in the first memory area (first memory) are set as 0.

The above operations should generally bring out the condition that all images of plural image areas included in the optical information recorded medium in the form of a sheet have been converted into the image data. In case the number of the image areas corresponding to the obtained image data is different from the number of original image areas, it is required to carry out the operations by changing the threshold value until these two numbers are coincident with each other. However, since the threshold value can be easily determined experientially, the changing operation is generally required only one time.

The all operations are performed using a computer into which a program for the above operations is introduced.

The information recorded medium according to the invention is a medium wherein a program for performing the process for dividing image data of plural image areas included in an optical information recorded medium in the form of a sheet into image data of each of the image areas is recorded. Examples of the medium include ROM (Read Only Memory) such as CD-ROM, a hard disk, an optical magnetic disk, an optical disk and a floppy disk.

The invention brings out the following effect:

Image information of plural image areas in an optical information recorded medium in the form of a sheet (e.g., microfiche) on which a large number of micro images (microfilms) are longitudinally and latitudinally arranged, has been conventionally scanned every micro images by a scanner to prepare an image file. According to the invention, in stead of such an operation, a process comprising scanning the image information of plural image areas only one time and dividing automatically the image data of the obtained image file without assistance is carried out, whereby a great number of optical information recorded media in the form of a sheet can be handled in extremely short time compared with the conventional operation.

Even if the image areas in the information recorded medium are different in size from one another, the image areas can be read by a conventional scanner. Therefore the invention can reduce cost for preparing an exclusive scanner.

The list of reference numbers in Figs. is as follows:
- 1:: Signal-processing device
- 2:: Scanner
- 3:: Input device
- 4:: Memory
- 5:: Display
- 6:: Non-image area
- MFP:: Optical information recorded medium
- MFS:: Image file
- 7, 8:: Contour line
- Z1 to Z24:: Image area
- Pemn (PE11 to PE90):: Pixel
- S11 to S89:: Pixel signal
- ZS1 to ZS4:: Group of pixel signals

## Claims

1. An apparatus for dividing image data of plural image areas included in an optical information recorded medium in the form of a sheet into image data of each of the image areas comprising the means (1) to (8):
means (1) for reading images existing in plural image areas and non-image areas for separating the image areas to each of the image areas, these image and non-image areas being provided in the optical information recorded medium, by an element capable of converting light to electric signals, to obtain image data comprising binary pixel data consisting of logical values of 0 and 1 and position information on the position of each of the image areas;
means (2) for storing the image data as an image file in a first memory;
means (3) for scanning the image data in a first memory according to a predetermined scanning pattern from a specified point of the image data, to check whether the logical value of each pixel of the image is 1 or 0, and in case of detecting the pixel having a logical value of 1 by the checking, checking logical values of plural pixels in the vicinity of the pixel having a logical value of 1 to judge whether the pixel having a logical value of 1 is noise or not based on a specified threshold value;
means (4) for judging that one of the image areas is present in an area including aggregated pixels including the pixel having a logical value of 1 when the aggregated pixels has dimension not lessr than a predetermined dimension;
means (5) for detecting a contour line of one of the image areas, when it is judged that the one of image areas is present;
means (6) for storing image data of the image area surrounded by the contour line together with the position information in a second memory;
means (7) for setting a logical value of pixel data in the image area stored in the second memory at 0, out of plural image areas in the image file stored in the first memory; and
means (8) for repeatedly using the means (3) to (7) such that the image data of each of the image areas stored in the first memory are stored in order in the second memory.

2. An apparatus as defined in claim 1, wherein the optical information recorded medium is a microfiche having a micro image in the image area.

3. A process for dividing image data of plural image areas included in an optical information recorded medium in the form of a sheet into image data of each of the image areas comprising the steps (1) to (8):
a step (1) of reading images existing in plural image areas and non-image areas for separating the image areas to each of the image areas, these image and non-image areas being provided in the optical information recorded medium, by an element capable of converting light to electric signals, to obtain image data comprising binary pixel data consisting of logical values of 0 and 1 and position information on the position of each of the image areas;
a step (2) of storing the image data as an image file in a first memory;
a step (3) of scanning the image data in a first memory according to a predetermined scanning pattern from a specified point of the image data, to check whether the logical value of each pixel of the image is 1 or 0, and in case of detecting the pixel having a logical value of 1 by the checking, checking logical values of plural pixels in the vicinity of the pixel having a logical value of 1 to judge whether the pixel having a logical value of 1 is noise or not based on a specified threshold value;
a step (4) of judging that one of the image areas is present in an area including aggregated pixels including the pixel having a logical value of 1 when the aggregated pixels has dimension not less than a predetermined dimension;
a step (5) of detecting a contour line of one of the image areas, when it is judged that the one of image areas is present;
a step (6) of storing image data of the image area surrounded by the contour line together with the position information in a second memory;
a step (7) of setting a logical value of pixel data in the image area stored in the second memory at 0, out of plural image areas in the image file stored in the first memory; and
a step (8) of repeatedly using the means (3) to (7) such that the image data of each of the image areas stored in the first memory are stored in order in the second memory.

4. A process as defined in claim 3, wherein the optical information recorded medium is a microfiche having a micro image in the image area.

5. An information recorded medium capable of reading out by computer, wherein a program for performing the process as defined in claim 3 is recorded.
